# EUROPÄISCHE PATENTSCHRIFT

(11) **EP 2 857 592 B1**
(45) Veröffentlichungstag und Bekanntmachung des Hinweises auf die Patenterteilung: **21.12.2016**
(21) Anmeldenummer: 14184206.2
(22) Anmeldetag: 10.09.2014
(51) Int. Cl.: E02F 3/627, A01B 1/00, B62D 49/00, E02F 9/22, F15B 1/02, A01B 59/06

(54) **Hydrauliksystem für eine Frontladeranordnung eines Fahrzeuges**
Hydraulic system for the front loader assembly of a vehicle
Circuit hydraulique pour le système de chargeur frontal d'un vehicule

(30) Priorität: 01.10.2013 DE 102013219936; 01.10.2013 DE 102013219931; 31.10.2013 DE 102013222165
(43) Veröffentlichungstag der Anmeldung: 08.04.2015
(73) Patentinhaber: Deere & Company, Moline, IL 61265 (US)
(72) Erfinder: Bertrand, Hugues, 70190 Rioz (FR); Faivre, Damien, 70100 Apremont (FR)
(74) Vertreter: Reichert, Christian

(56) Entgegenhaltungen:
- EP-A1- 1 179 293
- EP-A1- 2 189 581
- EP-A2- 1 520 994
- WO-A1-2008/147303
- WO-A2-2013/020856
- DE-A1-102008 034 301
- US-A- 4 904 151

## Beschreibung

Die Erfindung betrifft eine Frontladeranordnung mit einem Anbaurahmen und einem Anbaumast, wobei der Anbaumast an den Anbaurahmen ankoppelbar und von diesem abkoppelbar ist, mit einer mit dem Anbaumast verbundenen Frontladerschwinge, welche über einen sich zwischen Frontladerschwinge und Anbaumast erstreckenden Hydraulikzylinder verschwenkbar ist, wobei der Hydraulikzylinder doppeltwirkend mit einer kolbenstangenseitigen und einer kolbenbodenseitigen Kammer ausgebildet ist, und mit einer Vorrichtung zur hydraulischen Federung der Frontladerschwinge, wobei die Vorrichtung einen Hydraulikspeicher in Verbindung mit einem lastdrucksteuerbarem Steuerventil umfasst.

Frontladeranordnungen, d.h. die Anordnung eines Frontladers an einem Fahrzeug, insbesondere an einem landwirtschaftlichen Fahrzeug, oder auch an einer anderen Art von Nutzfahrzeug, sind bekannt. So können Frontlader mittels eines Anbaurahmens an ein Fahrzeug, beispielsweise an einen Traktor oder einen landwirtschaftlichen Schlepper, angeschlossen bzw. angebaut werden, um Laderarbeiten auszuführen. Der Anbaurahmen wird üblicherweise an den Fahrzeugrahmen geschraubt bzw. ist an diesem befestigt. Der Frontlader selbst verfügt über eine Anschluss- bzw. Anbaustelle oder Anbaumast, die an die Konsole angeschlossen bzw. angebaut bzw. angelenkt wird. Diesbezüglich sind verschiedene Möglichkeiten bekannt. So weisen einige bekannte Ausführungsbeispiele für Frontladeranordnungen Mechanismen auf, die zwei an der Konsole ausgebildete Fanghaken vorsehen, welche zur Aufnahme von zwei an der Mastanordnung des Frontladers ausgebildeten Lagerbolzen dienen, wobei wenigstens einer der Fanghaken nach der Aufnahme der Lagerbolzen verriegelt wird. Die Aufnahme der Lagerbolzen erfolgt dabei durch Heranführen des Anbaurahmens bzw. Heranfahren des Fahrzeugs an den Anbaumast bzw. an den Frontlader, welcher sich in entsprechender Parkstellung bzw. Anbaustellung befindet. Nach Aufnahme der Lagerbolzen kann die Verriegelung der Fanghaken manuell oder auch teilautomatisiert bzw. vollautomatisiert bzw. fremdmotorisch bzw. ferngesteuert erfolgen. Andere Mechanismen sehen vor, dass die Konsole nur einen Fanghaken aufweist, der zur Aufnahme eines an der Mastanordnung ausgebildeten Lagerbolzens dient. Zur Verriegelung sind dann an Anbaurahmen und Anbaumast jeweils Verbindungsöffnungen ausgebildet, welche, zueinander in Flucht gebracht, über einen Verriegelungsbolzen miteinander verbunden werden bzw. durch welche ein Verriegelungsbolzen geführt wird. Auch hier kann die Verriegelung manuell oder auch teilautomatisiert bzw. vollautomatisiert bzw. fremdmotorisch bzw. ferngesteuert erfolgen. Ferner ist es bekannt, eine Frontladeranordnung mit einer hydraulischen Federung vorzusehen. Dazu ist in der Regel ein Hydraulikspeicher vorgesehen, der über ein lastdruckgesteuertes Steuerventil mit den Hydraulikzylindern in Verbindung gebracht wird, so dass eine hydraulische Federung der Hydraulikzylinder hergestellt wird, indem ein Fluidaustausch zwischen den Kammern der Hydraulikzylinder und dem Hydraulikspeicher stattfinden kann.

Die EP 2 189 581 A1 offenbart ein Fahrzeug mit einer Ladervorrichtung, wobei die Ladervorrichtung eine Laderschwinge umfasst und ferner ein Hydrauliksystem zum Heben und Senken der Laderschwinge mit hydraulischer Federung zur Federung der Laderschwinge und eine Steuereinheit zur Ansteuerung der Federung vorgesehen ist.

Ferner wird in DE 10 2008 034 301 A1 ein hydraulisches System offenbart, welches eine erste Kammer und eine zweite Kammer eines hydraulischen Aktuators mit jeweils einem Anschluss zur Anbindung an ein hydraulisches System umfasst. Mindestens eine verstellbare hydraulische Pumpe ist vorgesehen, aufweisend mindestens einen ersten Anschluss und einen zweiten Anschluss, wobei der erste Anschluss mit der ersten Kammer des hydraulischen Aktuators und der zweite Anschluss mit der zweiten Kammer des hydraulischen Aktuators verbunden ist. Die erste Kammer ist mit der zweiten Kammer über mindestens ein Schnellsenkventil mit einem regelbaren Strömungsquerschnitt verbunden.

Eine oben genannte teilautomatisierte Verriegelung offenbart ferner auch die US 2007/0059147 A1, in der eine Frontladeranordnung vorgestellt wird, die einen federvorgespannten Verriegelungsbolzen umfasst, welcher über an einem Anbaumast und an einem Anbaurahmen ausgebildete Stellelemente betätigbar ist, indem die Stellelemente durch Relativbewegung zueinander eine Verriegelung auslösen, derart, dass der Verriegelungsbolzen durch Federkraft in an dem Anbaumast und an dem Anbaurahmen der Frontladeranordnung ausgebildete Verbindungsöffnungen geführt wird. Zum Entriegeln muss der Verriegelungsbolzen entgegen der Federkraft manuell aus den Verbindungsöffnungen herausgeführt und die Stellelemente in eine entsprechende Entriegelungsstellung gebracht werden. Nachteilig wirkt sich hierbei aus, dass insbesondere die Ausbildung und Anordnung des an der Mastanordnung ausgebildeten Stellelements, sowie dessen Verbindung mit dem Verriegelungsbolzen einen relativ komplexen Fertigungs- und Montageaufwand erfordern.

Ferner offenbart die EP 1 774 106 B1 eine Frontladeranordnung, bei der der Anbaumast über eine am Anbaurahmen ausgebildete Rampe geführt wird, wobei am Anbaurahmen Fanghaken ausgebildet sind, in die am Anbaumast ausgebildete Lagerbolzen aufgenommen werden. Über einen federvorgespannten Verriegelungsschnapper, der in eine an der Rampe ausgebildete erste und dann zweite Vertiefung eingreift, kann die Frontladeranordnung verriegelt werden, wobei hier eine Vorverriegelung ausgebildet ist, in der der Verriegelungsschnapper in die erste Vertiefung eingreift und der Anbaumast noch relativ zum Anbaurahmen bewegbar ist, bis dieser seine Endstellung erreicht, in der die Lagerbolzen vollständig in die Fanghaken eingeführt worden sind. Erst dann schnappt der Verriegelungsschnapper in die zweite Vertiefung ein, mit der sich eine Endverriegelung einstellt. Nachteilig wirkt sich hier aus, dass zum einen die Ausbildung und Anordnung des am Anbaumast vorgesehenen Verriegelungsschnappers und ferner die am Anbaurahmen ausgebildete erste und zweite Vertiefung zur Vor- bzw. Endverriegelung einen relativ komplexen Fertigungs- und Montageaufwand, sowie eine hohe Teilevielfalt erfordern.

Die der Erfindung zugrunde liegende Aufgabe wird darin gesehen, eine Frontladeranordnung der eingangs genannten Art anzugeben, durch welche ein oder mehrere der vorgenannten Nachteile überwunden werden.

Die Aufgabe wird erfindungsgemäß durch die Lehre des Patentanspruchs 1 gelöst. Weitere vorteilhafte Ausgestaltungen und Weiterbildungen der Erfindung gehen aus den Unteransprüchen hervor.

Erfindungsgemäß wird eine Frontladeranordnung der eingangs genannten Art derart ausgebildet, dass an der Frontladeranordnung Stellmittel vorgesehen sind, durch welche der Hydraulikzylinder bei abgekoppelter hydraulischer Versorgung in eine Schwimmstellung bringbar ist, wobei die Stellmittel ein Absperrventil umfassen, welches eine erste und eine zweite Schaltstellung aufweist, wobei in der ersten Schaltstellung eine über das Absperrventil laufende Fluidverbindung zwischen der kolbenbodenseitigen Kammer, der kolbenstangenseitigen Kammer und dem Hydraulikspeicher hergestellt ist. Eine Fluidverbindung zwischen der kolbenbodenseitigen und der kolbenstangenseitigen Kammer des Hydraulikzylinders stellt sicher, dass der Hydraulikzylinder in eine Schwimmstellung gebracht wird. Dadurch kann sich der Anbaumast relativ frei bewegen und wird nicht, wie sonst üblich beim Ankoppeln, durch den Hydraulikzylinder blockiert, da eine Hydraulikverbindung zwischen Fahrzeug und Frontladeranordnung beim Abkoppeln getrennt wurde und beim Ankoppeln erst von einer Bedienperson in einem weiteren Schritt getätigt werden kann, wenn der Anbaumast an den Anbaurahmen gekoppelt wurde. Der Anbaurahmen kann beispielsweise eine Rampe umfassen, auf der der Anbaumast zum An- und Abkoppeln verschiebbar geführt wird. Durch die Schwimmstellung kann der Anbaumast um seinen Anlenkpunkt zur Frontladerschwinge, also relativ zur Lagerschwinge, verschwenkt werden und sich beispielsweise beim Ankoppeln einem Anstellwinkel zum Anbaurahmen anpassen bzw. zu diesem ausgerichtet werden. Ein Ausrichten erfolgt dabei dadurch, dass die Lagerbolzen des Anbaumasts beim Ankoppeln über die Rampe gleiten und in die Fanghaken geführt werden, wobei durch diese Wechselwirkung die Lagerbolzen in ihre zum Ankoppeln vorgesehene Stellung bzw. Position gebracht werden. Ohne der genannten Schwimmstellung am Hydraulikzylinder würde der Anbaumast in einer starren Verbindung zur Frontladerschwinge stehen, so dass der Anbaumast keine Schwenkbewegungen relativ zur Frontladerschwinge ausüben kann. Sollten sich also während einer Zeit, in der die Frontladeranordnung vom Fahrzeug abgekoppelt war, die geometrischen Abmessungen zwischen Fahrzeug und Frontladeranordnung geändert haben, was durchaus die Regel darstellt, beispielsweise aufgrund Standortinstabilitäten (Bodenunebenheiten, Absacken des Bodens etc.), Änderung der Befüllung der Reifen des Fahrzeugs, Änderungen der Reifengröße, Leckagen an der Hydraulik der Frontladereinrichtung oder aufgrund anderer Umstände, dann ist damit in der Regel auch eine Veränderung des Anstellwinkels des Anbaumasts zum Anbaurahmen verbunden, wodurch das nächste Ankoppeln der Frontladeranordnung erheblich erschwert wird, da aufgrund der starren Verbindung zwischen Anbaumast und Frontladerschwinge, die gesamte Frontladeranordnung (der Anbaurahmen ausgenommen) angehoben, verschoben, abgesenkt, gekippt etc. und damit auch das gesamte Gewicht der Frontladeranordnung bewegt werden muss, bis sich der Anbaumast entsprechend dem Anbaurahmen ausgerichtet hat. Das Absperrventil wird vorzugsweise direkt nach dem Abkoppeln des Frontladers vom Fahrzeug, bei dem auch üblicherweise eine Hydraulikversorgung vom Fahrzeug für die Hydraulikzylinder der Frontladeranordnung (Betriebshydraulik) unterbrochen bzw. abgekoppelt wird, geöffnet, wodurch der Hydraulikzylinder bereits in Schwimmstellung gehalten wird und für das nächste Ankoppeln vorbereitet ist. Das Öffnen des Absperrventils kann selbstverständlich auch erst unmittelbar vor dem nächsten Ankoppeln erfolgen. Ein manuelles Öffnen kann hier zwar vorgesehen sein, dies soll jedoch nur gewährleisten, dass das Einstellen der Schwimmstellung für den Hydraulikzylinder unabhängig von der Fahrzeughydraulik bzw. von einer Betriebshydraulik für die Frontladeranordnung erfolgen kann. Es ist durchaus denkbar hier auch eine mechanische oder elektrische Vorrichtung zum Öffnen des Absperrventils vorzusehen, sofern diese unabhängig von der Betriebshydraulik des Frontladers betreibbar ist bzw. unabhängig von einer Betriebshydraulik das Öffnen des Absperrventils gewährleistet, d.h. das Öffnen des Absperrventils veranlasst, wenn eine Verbindung zur Betriebshydraulik unterbrochen wird. Ferner kann in der ersten Schaltstellung über das Absperrventil gleichzeitig auch eine laufende Fluidverbindung zwischen der kolbenbodenseitigen Kammer, der kolbenstangenseitigen Kammer und dem Hydraulikspeicher hergestellt werden. Damit kann der ohnehin für die hydraulische Federung der Frontladeranordnung vorgesehene Hydraulikspeicher durch Öffnen des Absperrventils mit der kolbenbodenseitigen und der kolbenstangeseitigen Kammer fluidverbunden verbunden werden, wobei die Volumenunterschiede bzw. die Querschnittsunterschiede der beiden Kammern durch den Hydraulikspeicher kompensiert werden.

In der zweiten Schaltstellung ist eine über das Absperrventil laufende Fluidverbindung zwischen der kolbenbodenseitigen Kammer, der kolbenstangenseitigen Kammer und dem Hydraulikspeicher unterbrochen. In dieser Stellung ist die hydraulische Federung voll funktionsfähig, d.h. der Hydraulikspeicher kann allein über das lastdrucksteuerbare Steuerventil betrieben werden und auch der Hydraulikzylinder ist zum Heben und Senken der Frontladeranordnung einsatzbereit.

In einer alternativen Ausführungsform ist ein weiterer Hydraulikspeicher vorgesehen und es wird in der ersten Schaltstellung eine über das Absperrventil laufende Fluidverbindung zwischen der kolbenbodenseitigen Kammer, der kolbenstangenseitigen Kammer und dem weiteren Hydraulikspeicher hergestellt. Die Funktionsweise ist dabei zu der oben beschriebenen Funktionsweise unverändert, nur dass ein beispielsweise kleinerer Hydraulikspeicher eingesetzt wird, womit in der Schwimmstellung die Bewegungsfreiheit aufgrund kleinerer Speicherdrücke verbessert werden kann. Der weitere Hydraulikspeicher wird dabei zur alleinigen Herstellung der Schwimmstellung des Hydraulikzylinders eingesetzt. Der für die hydraulische Federung vorgesehene Hydraulikspeicher wird dabei nicht verwendet. Dies ist insbesondere sinnvoll, wenn hohe Federraten für die hydraulische Federung vorgesehen sind, so dass der für die hydraulische Federung vorgesehene Hydraulikspeicher eine relativ hohe Federdruckzahl aufweist, die für den Einsatz zur Schwimmstellungsfunktion unverhältnismäßig hoch ist.

In der zweiten Schaltstellung ist eine über das Absperrventil laufende Fluidverbindung zwischen der kolbenbodenseitigen Kammer, der kolbenstangenseitigen Kammer und dem weiteren Hydraulikspeicher unterbrochen. In dieser Stellung ist die hydraulische Federung voll funktionsfähig, und der weitere Hydraulikspeicher isoliert, d.h. der Hydraulikspeicher kann allein über das lastdrucksteuerbare Steuerventil betrieben werden und auch der Hydraulikzylinder ist zum Heben und Senken der Frontladeranordnung einsatzbereit.

Zwischen dem weiteren Hydraulikspeicher und der kolbenbodenseitigen Kammer ist eine mit einem Rückschlagventil versehene Bypassleitung angeordnet ist, wobei das Rückschlagventil in Richtung des weiteren Hydraulikspeichers schließt. Dadurch wird gewährleistet, dass der weitere Hydraulikspeicher in einem isolierten Zustand über die Bypassleitung druckentlastet werden kann, beispielsweise, wenn eine Erwärmung des Hydraulikspeichers durch Sonneneinstrahlung erfolgt.

Die oben beschriebene Frontladeranordnung kann an verschiedenartigen Trägerfahrzeugen zum Einsatz kommen, insbesondere jedoch an landwirtschaftlichen Fahrzeugen wie Schlepper oder Traktoren.

Anhand der Zeichnung, die zwei Ausführungsbeispiele der Erfindung zeigt, werden nachfolgend die Erfindung sowie weitere Vorteile und vorteilhafte Weiterbildungen und Ausgestaltungen der Erfindung näher beschrieben und erläutert.

Es zeigt:
- Fig. 1: eine schematische Seitenansicht eines landwirtschaftlichen Fahrzeugs mit einer Frontladeranordnung,
- Fig. 2: eine schematische Seitenansicht eines Anbaumasts im Querschnitt und eines Anbaurahmens der Frontladeranordnung aus Figur 1 in einem abgekoppelten Zustand,
- Fig. 3: eine weitere schematische Seitenansicht des Anbaumasts und des Anbaurahmens aus Figur 2 in einem ersten Ankoppelzustand,
- Fig. 4: eine weitere schematische Seitenansicht des Anbaumasts und des Anbaurahmens aus Figur 2 und 3 in einem weiteren Ankoppelzustand,
- Fig. 5: eine weitere schematische Seitenansicht des Anbaumasts und des Anbaurahmens aus Figur 2 bis 4 in einem angekoppelten Zustand,
- Fig. 6: eine weitere schematische Seitenansicht des Anbaumasts und des Anbaurahmens aus Figur 2 bis 5 in einem ersten Abkoppelzustand,
- Fig. 7: eine weitere schematische Seitenansicht des Anbaumasts und des Anbaurahmens aus Figur 2 bis 6 in einem weiteren Abkoppelzustand,
- Fig. 8: eine weitere schematische Seitenansicht des Anbaumasts und des Anbaurahmens aus Figur 2 bis 7 in einem abgekoppelten Zustand,
- Fig. 9: eine perspektivische Seitenansicht des Schwenkhebels des Anbaumasts aus den Figuren 2 bis 8,
- Fig. 10: eine perspektivische Seitenansicht der Betätigungseinrichtung für den Schwenkriegel des Anbaumasts aus den Figuren 2 bis 8,
- Fig. 11: ein schematisches Hydraulikschaubild einer ersten Ausführungsform einer Frontladeranordnung mit hydraulischer Federung und Stellmitteln zur Herstellung einer Schwimmstellung für die Hydraulikzylinder und
- Fig. 12: ein erstes schematisches Hydraulikschaubild einer weiteren Ausführungsform für eine Frontladeranordnung mit hydraulischer Federung und Stellmittel zur Herstellung einer Schwimmstellung für die Hydraulikzylinder.

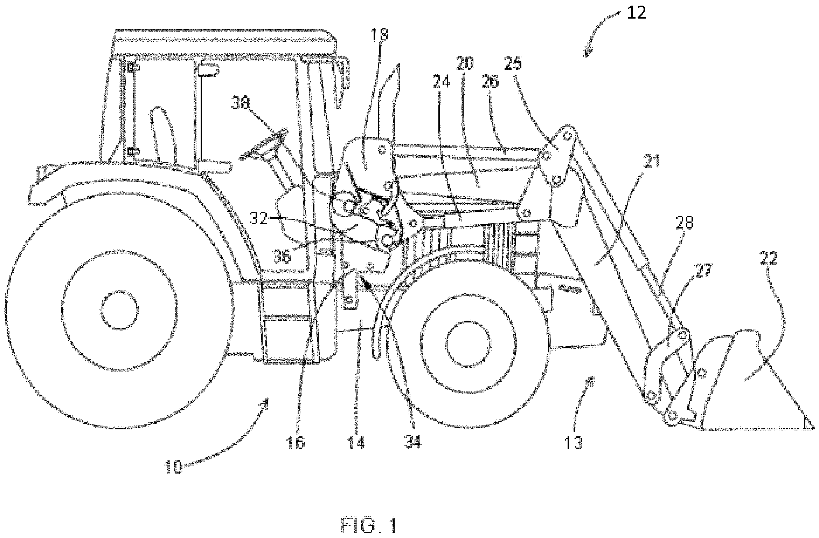

In Figur 1 ist ein landwirtschaftliches Fahrzeug in Form eines Schleppers 10 (Trägerfahrzeug) dargestellt. Der Schlepper 10 verfügt über eine angebaute Frontladeranordnung 12. Die Frontladeranordnung 12 umfasst einen Frontlader 13, sowie beidseitig des Schleppers 10 an einem Fahrzeugrahmen 14 des Schleppers 12 angebaute Anbaurahmen 16 zum Ankoppeln des Frontladers 13. Der Frontlader 13 weist ebenfalls beidseitig des Schleppers einen Anbaumast 18 auf, mittels welchen der Frontlader 13 an den Anbaurahmen 16 der Frontladeranordnung 12 und damit an den Schlepper 10 angekoppelt wird.

Die Frontladeranordnung 12 bzw. der Frontlader 13 weist eine schwenkbar an den Anbaumasten 18 befestigte Frontladerschwinge 20 auf, an die sich ein schwenkbares Frontladerwerkzeug 22 anschließt. Die Frontladerschwinge 20 erstreckt sich beidseitig des Schleppers und umfasst beidseitig des Schleppers 10 parallel verlaufende Träger 21, die über einen oder mehrere Querträger (nicht gezeigt) miteinander verbunden sind. Das Frontladerwerkzeug 22 ist beispielhaft in Form einer Ladeschaufel ausgebildet, wobei das Frontladerwerkzeug 22 auch als Ladegabel, Greifer etc. ausgebildet sein könnte. Die Frontladerschwinge 20 ist über hydraulische Hubzylinder 24, die sich beidseitig des Schleppers 10 zwischen den jeweiligen Anbaumasten 18 und der Frontladerschwinge 20 erstrecken, verschwenkbar. Zwischen beidseitig der Frontladerschwinge 20 mit dieser verbundene Lenker 25 und den jeweiligen Anbaumasten 18 erstreckt sich jeweils ein Lenkgestänge 26, welches zur Parallelführung des Frontladerwerkzeugs 22 dient. Das Frontladerwerkzeug 22 ist beidseitig der Frontladerschwinge 20 über ein mit der Frontladerschwinge 20 und dem Frontladerwerkzeug 22 verbundenes Schwenkgestänge 27, sowie über einen mit dem jeweiligen Schwenkgestänge 27 und dem jeweiligen Lenker 25 verbundenen hydraulischen Schwenkzylinder 28 verschwenkbar.

Der Anbaurahmen 16 weist einen Aufnahmebereich 32 zur Aufnahme bzw. Ankopplung des Anbaumasts 18 sowie einen Befestigungsbereich 34 zur Befestigung des Anbaurahmens 16 an den Fahrzeugrahmen 14 auf. Am Befestigungsbereich 34 ist der Anbaurahmen 16 über Schraubverbindungen (nicht gezeigt) an den Fahrzeugrahmen 14 angeschraubt. Der Anbaurahmen 16 weist an einem unteren Bereich des Aufnahmebereichs 32 einen ersten Fanghaken 36 und an einem oberen Bereich des Aufnahmebereichs 32 einen zweiten Fanghaken 38 bzw. jeweils hakenförmige Lagerstellen auf.

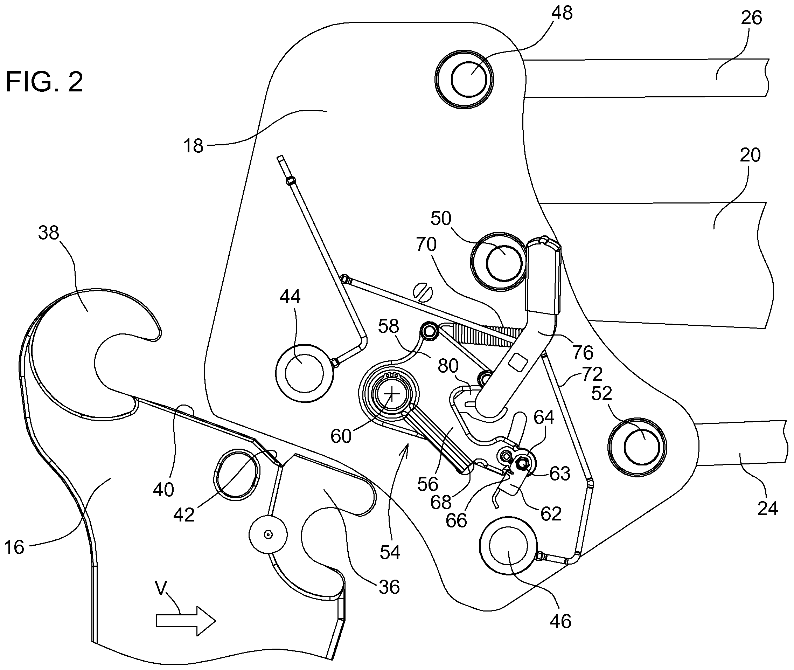

In den Figuren 2 bis 8 ist eine jeweilige Kombination aus Anbaumast 18 und Anbaurahmen 16 der Frontladeranordnung 12 vergrößert in mehreren Seitenansichten bzw. in mehreren Querschnittsansichten dargestellt, in den weitere Einzelheiten der Frontladeranordnung 12 im Detail dargestellt sind.

Der Anbaurahmen 16 weist eine Rampe 40 oder rampenförmige Ausgestaltung auf, die sich zwischen den beiden Fanghaken 36, 38 erstreckt und im unteren Bereich, ausgehend vom oberen Fanghaken 38 entlang der Rampe 40, unmittelbar vor dem unteren Fanghaken 36 eine Vertiefung 42 oder Einkerbung umfasst.

Der Anbaumast 18 umfasst eine obere und untere Lagerstelle in Form von einem oberen Lagerbolzen 44 sowie einem unteren Lagerbolzen 46. Hierbei ist es denkbar, dass die Kombination von Fanghaken 36, 38 und Lagerbolzen 44, 46 auch auf umgekehrte Weise ausführbar ist, so dass die Lagerbolzen 44, 46 am Anbaurahmen 16 und die Fanghaken 36, 38 am Anbaumast 18 ausgebildet sind. Am Anbaumast 18 sind ferner ein oberer, ein mittlerer und ein unterer Schwenkbolzen 48, 50, 52 angeordnet, die das Lenkgestänge 26, die Frontladerschwinge 20, sowie den Hydraulikzylinder 24 jeweils schwenkbar mit dem Anbaumast 18 verbinden.

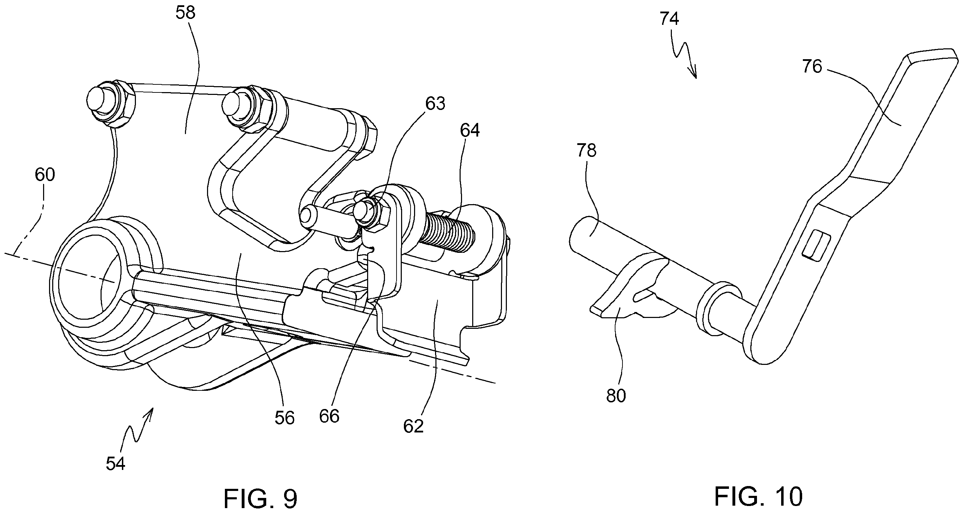

Der Anbaumast 18 umfasst ferner einen Schwenkriegel 54, der einen ersten Schwenkarm 56 und einen zweiten Schwenkarm 58 aufweist und um eine Schwenkachse 60 verschwenkbar gelagert ist (siehe auch Figur 9). An dem freien Ende des ersten Schwenkarms 56 ist ein Stellmittel in Form eines Stützmittels 62 angeordnet, welches in Form eines Stützscharniers ausgebildet ist. Das Stützmittel 62 ist am Ende des ersten Schwenkarms 56 mittels eines Gelenks 63 schwenkbar angelenkt und mittels einer Spiralfeder 64 derart vorgespannt, dass es gegen das Ende des ersten Schwenkarms 56 gepresst bzw. gedrückt oder gedrängt wird und in einer Extremstellung am Ende des Schwenkarms 56 bzw. an einer dort ausgebildeten Stirnfläche 66 zur Anlage kommt. Die Unterseite des ersten Schwenkarms 56, also die der Rampe 40 zugekehrte Seite des Schwenkarms 56, weist einen Absatz 68 auf, der komplementär zu der auf der Rampe 40 ausgebildeten Vertiefung 42 geformt ist.

Der zweite Schwenkarm 58 des Schwenkriegels 54 ist kürzer ausgebildet und oberhalb des ersten Schwenkarms 56, in einem Winkel um ca. 70° versetzt, angeordnet (in den Figuren entgegen dem Uhrzeigersinn) und bildet neben dem ersten Schwenkarm 56 einen weiteren Hebelarm um die Schwenkachse 60 des Schwenkriegels 54. Der zweite Schwenkarm 58 ist über eine Spannfeder 70 mit einem Rahmenteil 72 des Anbaumasts 18 verbunden, so dass eine Vorspannung des Schwenkriegels 54 in Richtung zur Rampe 40 erzeugt wird.

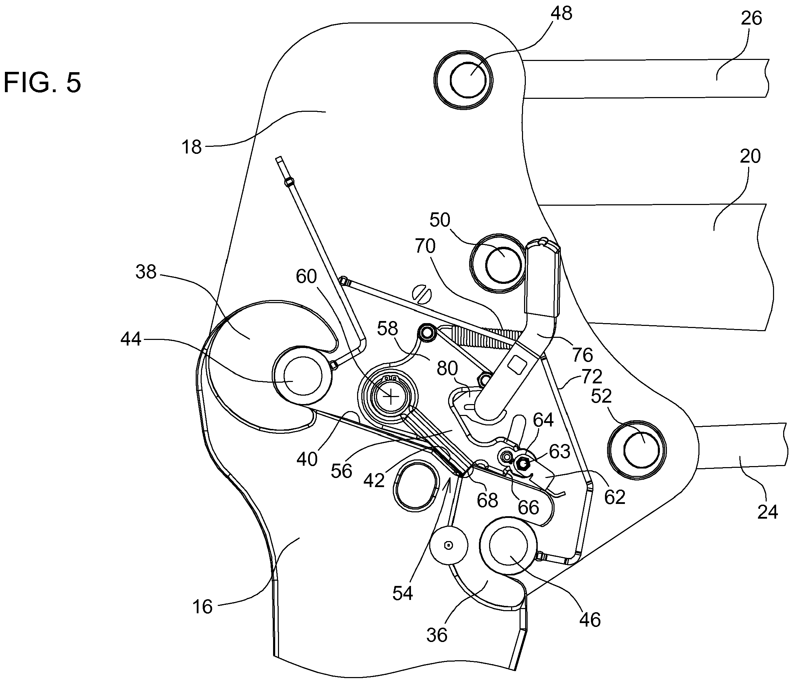

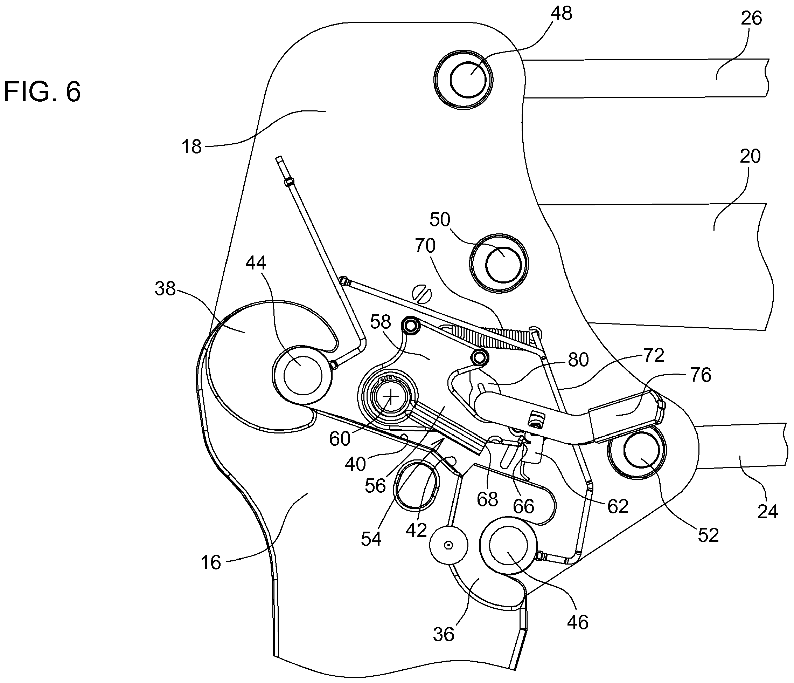

Zwischen dem ersten und dem zweiten Schwenkarm 56, 58 ist ein Betätigungselement 74 angeordnet (siehe Figur 10), über welches der Schwenkriegel 54 betätigbar ist. Das Betätigungselement 74 weist einen Betätigungshebel 76 auf, der an der Außenseite des Anbaumasts 18 zugänglich ist und sich von einer Welle 78 radial erstreckt. Die Welle 78 ist zwischen den beiden Schwenkarmen 56, 58 drehbar am Anabaumast 18 gelagert. In einem mittleren Bereich der Welle 78 ist ein Stellarm 80 ausgebildet, der sich von der Welle 78 radial erstreckt und derart ausgebildet und angeordnet ist, dass er durch Verdrehen der Welle 78 mit dem zweiten Schwenkarm 58 des Schwenkriegels 54 in Eingriff bringbar ist und diesen aushebeln bzw. in eine Schwenkbewegung versetzen kann. Die Welle wird dabei durch Verschwenken des Betätigungshebels 76 aus einer Grundstellung (Figuren 2 bis 5, 7 und 8) in eine Eingriffsstellung (entsprechend Figur 6) in Drehung versetzt, woraufhin der Stellarm 80 ebenfalls verschwenkt und mit dem oberen Schwenkarm 58 und damit mit dem Schwenkriegel 54 in Eingriff gebracht wird und der Schwenkriegel 54 aus einer Verriegelungsstellung (siehe Figur 5) in eine Entriegelungsstellung (siehe Figur 6) bewegt werden kann. Durch Zurückverschwenken wird der Schwenkarm 58 und damit auch der Schwenkriegel 54 wieder frei gegeben.

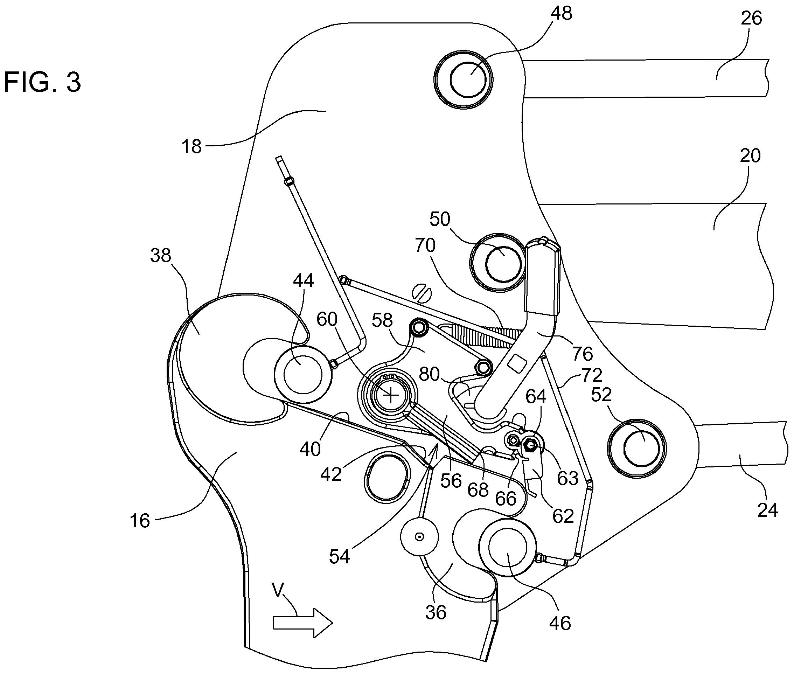

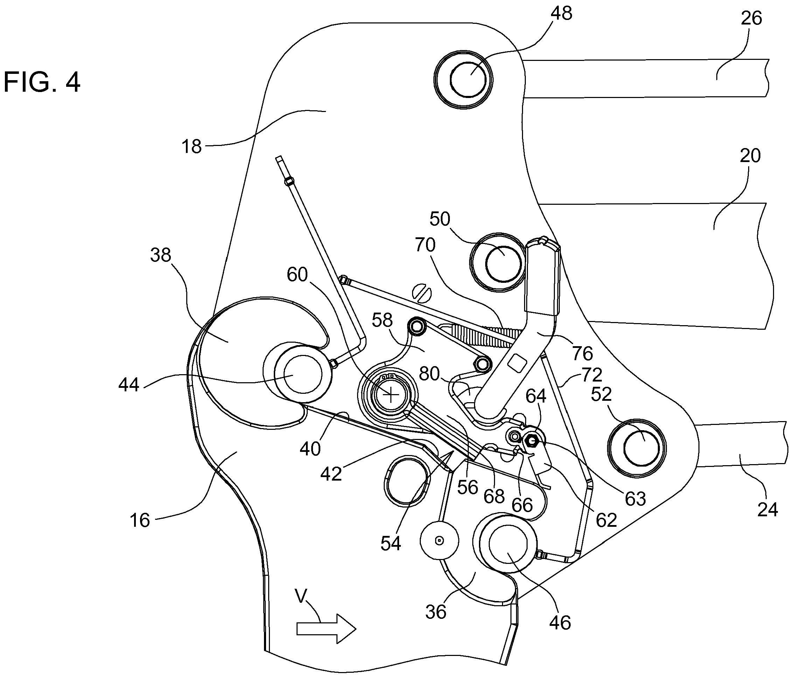

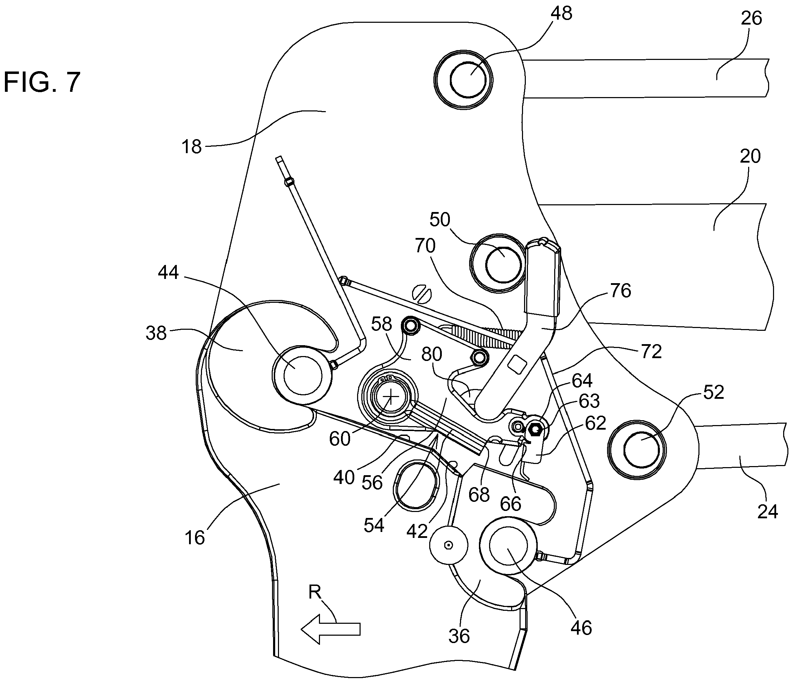

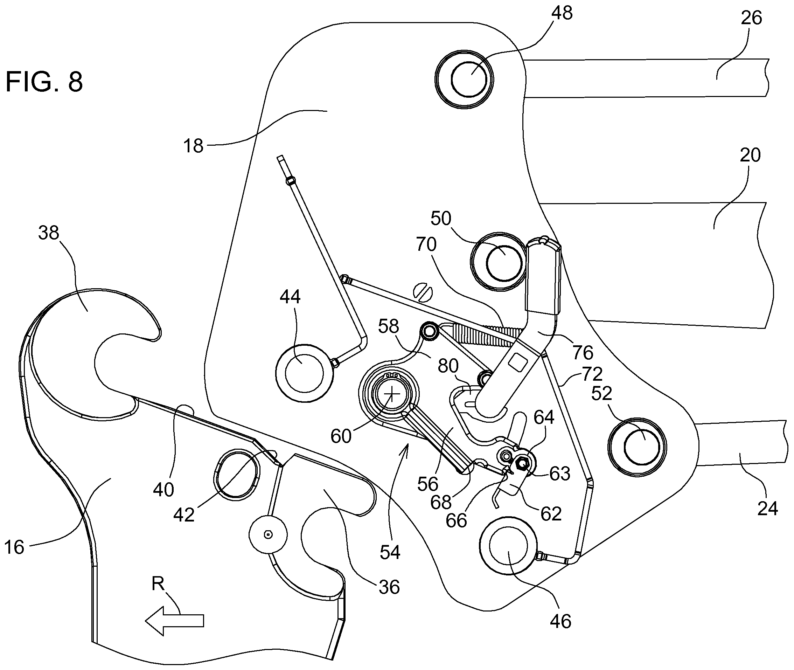

Ein Ankoppeln bzw. Abkoppeln des Frontladers 13 bzw. Des Anbaumasts 18 vom Anbaurahmen 16 wird wie folgt anhand der Figuren 2 bis 8 beschrieben. Der Anbaurahmen 16 wird aus einem abgekoppelten Zustand, in dem der Frontlader 13 abgestellt und von dem Schlepper hydraulisch und mechanisch getrennt ist, entsprechend der durch den Pfeil V angezeigten Bewegung in Richtung des Anbaumasts 18 bewegt (Figur 2). Der obere Lagerbolzen 44 beginnt mit der Rampe 40 in Eingriff zu treten und gleitet entlang der schiefen Ebene der Rampe 40 bzw. entlang der Rampenoberfläche hinauf, bis dieser mit dem oberen Fanghaken 38 in Eingriff tritt (Figuren 3 und 4). Gleichzeitig tritt der untere Lagerbolzen 46 mit dem unteren Fanghaken 36 in Eingriff (Figuren 3 und 4). Etwa zu dem Zeitpunkt, in dem die Lagerbolzen 44, 46 mit den Fanghaken 38, 36 in Eingriff treten (Figur 3) stößt der untere Fanghaken 36 bzw. ein unteres Ende der Rampe 40 gegen das Stützmittel 62 und beginnt dieses entgegen seiner Vorspannung aus seiner im Wesentlichen senkrecht zur Rampenoberfläche ausgerichteten Stellung, in der es die Stützposition oder Stützstellung einnimmt, in eine zunehmend ausgelenkte Stellung zu verschwenken (siehe Figuren 3 bis 5). Durch die Feder 70 am Schwenkriegel 54 wird dieser bei aufgehobener Stützstellung des Stützmittels 62 mit seinem unteren Schwenkarm 56 in Richtung der Rampenoberfläche bewegt, so dass schließlich der Absatz 68 des unteren Schwenkarms 56 auf der Rampe 40 zur Anlage kommt und entlang der Rampe hinauf gleitet (Figuren 3 und 4). Wie in Figur 5 zu sehen, erreicht der Anbaumast 18 relativ zum Anbaurahmen 16 eine Endstellung, in der die Lagerbolzen 44, 46 vollständig in den Fanghaken 38, 36 zur Anlage kommen. Gleichzeitig nimmt der federvorgespannte Schwenkriegel 54 seine Verriegelungsstellung ein und rastet mit dem am ersten Schwenkarm 56 ausgebildeten Absatz 68 in der Vertiefung 42 ein, so dass der Anbaumast 18 am Anbaurahmen 16 verriegelt wird, da eine Relativbewegung zwischen Anbaumast 18 und Anbaurahmen 16 nunmehr einerseits durch die Fanghaken und andererseits durch den in der Vertiefung 42 zur Anlage gekommenen Absatz 68 blockiert wird. Der Frontlader ist nun in Betriebsstellung und kann in Betrieb genommen werden. Figuren 6 bis 8 zeigen die Entriegelung des Frontladers, also das Abkoppeln des Anbaumasts 18 vom Anbaurahmen 16. Der Schwenkriegel 54 wird dabei mittels des Betätigungselements 74 wie oben beschrieben aus seiner Verriegelungsstellung in eine Entriegelungsstellung gebracht (Figur 6). Sogleich kann dadurch das federvorgespannte Stützmittel 62 seine Stützstellung einnehmen und der Schwenkriegel 54 vom Betätigungselement 74 wieder frei gegeben werden, indem der Betätigungshebel wieder in seine Grundstellung gebracht wird. Der Schwenkriegel 54 wird jetzt durch das Stützmittel 62 in der Entriegelungsstellung gehalten. Der Anbaumast 18 ist in diesem Zustand vom Anbaurahmen 16 entriegelt, so dass der Anbaurahmen 18 vom Anbaumast 18 entfernt werden kann, wie durch den Pfeil R in den Figuren 7 und 8 angedeutet ist. Durch die Relativbewegung zwischen Anbaumast 18 und Anbaurahmen 16 und das Entlanggleiten des Stützmittels 62 auf der Rampenoberfläche, wird das Stützmittel 62 gegen die Stirnfläche 66 des Schwenkarms 56 gedrängt, wodurch es seine Stützstellung beibehält und der Schwenkriegel 54 nicht zurück in die Vertiefung einschnappen kann (Figur 7). Durch Abrücken des Anbaurahmens 16, d.h. durch Zurücksetzen des Schleppers 10, kann der Anbaurahmen 16 nun vom Anbaumast 18, d.h. vom Frontlader 13 entfernt werden, damit ist das Abkoppeln des Anbaumasts 18 vom Anbaurahmen 16 abgeschlossen (Figur 8). Damit der Frontlader 13 vollständig vom Schlepper 10 getrennt und entfernt werden kann, muss zuvor die hydraulische Versorgung der Hubzylinder 24 abgekoppelt werden. Dies kann der Betreiber parallel zum Entriegeln des Schwenkriegels 54 vornehmen, d.h. in einem Arbeitsablauf werden der Schwenkriegel 54 entriegelt und die Hydraulikversorgung abgetrennt.

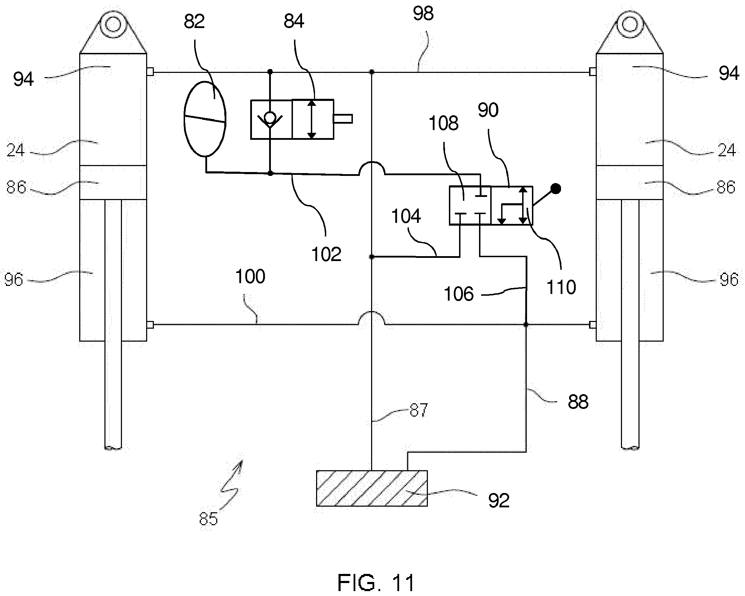

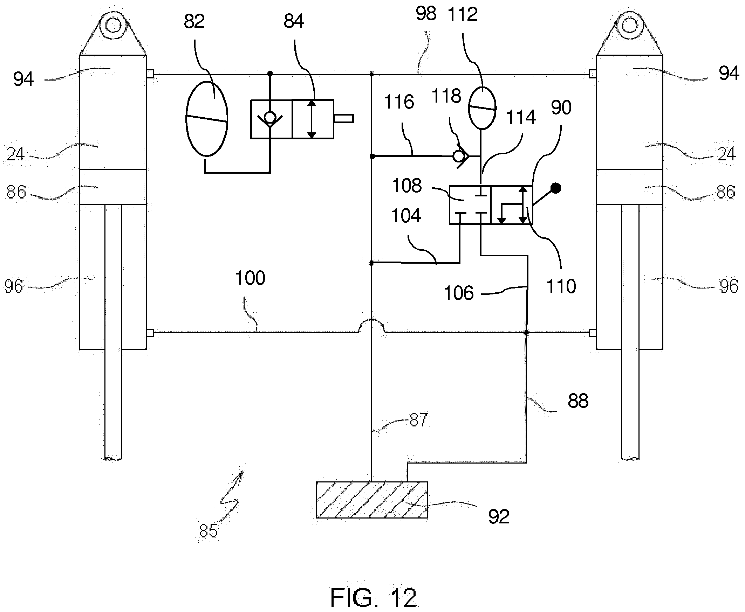

Der Frontlader 13 verfügt ferner über eine Vorrichtung zur hydraulischen Federung der Frontladerschwinge 20, wobei die Vorrichtung einen Hydraulikspeicher 82 in Verbindung mit einem lastdrucksteuerbarem Steuerventil 84 umfasst, wie in den Figuren 11 und 12 abgebildet ist, in denen ein Teil eines hydraulischen Systems 85 zur hydraulischen Versorgung von zwei doppelt wirkenden Hubzylindern 24 abgebildet ist, die einen Kolben 86 aufweisen und über eine hydraulische Versorgungsleitung 87 und eine hydraulische Versorgungsleitung 88 hydraulisch versorgt werden. Über das Steuerventil 84 kann der Hydraulikspeicher 82 zur Federung der Hubzylinder 24 eingesetzt werden, wobei hier auf eine herkömmliche Federung verwiesen wird, die, da bekannt, keiner detaillierten Beschreibung bedarf.

Um ein Ankoppeln zu erleichtern ist es sinnvoll, wie zuvor schon beschrieben wurde, dass der Anbaumast 18 sich beim Ankoppeln der Stellung des Anbaurahmens 16 möglichst frei anpassen kann, so dass die Lagerbolzen 44, 46 möglichst genau und präzise in die Fanghaken geführt werden. Dies wird dadurch erreicht, dass die starre Verbindung zwischen Anbaumast 18 und Frontladerschwinge 20, in der die Hubzylinder 24 bei abgetrennter hydraulischer Versorgung in ihrer zuletzt eingenommenen Stellung verharren und den Anbaumast 18 starr zur Frontladerschwinge 20 halten, aufgehoben wird. Der Anbaumast 18 wird dadurch in einen beweglichen Zustand verbracht, in welchem er relativ zur Frontladerschwinge 20 verschwenkbar ist. Dazu ist, wie die Figuren 11 und 12 schematisch zeigen, ein Absperrventil 90 vorgesehen, wobei in Figur 11 ein erstes und in Figur 12 ein zweites Ausführungsbeispiel einer hydraulischen Schaltung 85 für einen doppelt wirkenden Hubzylinder 24 mit einer Vorrichtung zur hydraulischen Federung abgebildet ist.

In beiden Ausführungsbeispielen ist das Absperrventil 90 manuell betätigbar ausgebildet und kann von einer Bedienperson, beim Ankoppeln und Abkoppeln des Frontladers 13 betätigt werden, wenn die Hydraulikversorgung angeschlossen bzw. abgetrennt wird.

In Bezug auf Figur 11 ist ein Teil ein Teil eines hydraulischen Systems 85 zur hydraulischen Versorgung von zwei doppelt wirkenden Hubzylindern 24 abgebildet, die einen Kolben 86 aufweisen und über die hydraulische Versorgungsleitung 87 und die hydraulische Versorgungsleitung 88 hydraulisch versorgt werden. Die Versorgungsleitung 87 erstreckt sich von einem Kupplungsteil 92 eines hydraulischen Schnellkupplers (nicht gezeigt) zu kolbenbodenseitigen Kammern 94 der Hubzylinder 24, wobei sich die Versorgungsleitung 88 vom Kupplungsteil 92 zu kolbenstangenseitigen Kammern 96 erstreckt. Wie in Figur 1 zu erkennen ist, sind die Hubzylinder 24 kolbenbodenseitig mit der Frontladerschwinge 20 und kolbenstangenseitig mit dem Anbaumast 18 verbunden, so dass durch hydraulisches Befüllen der kolbenbodenseitigen Kammern 94 die Frontladerschwinge 20 angehoben und abgesenkt werden kann, wobei auf bekannte Weise eine entsprechende Ansteuerung eines Steuerventils (nicht gezeigt) des hydraulischen Systems 85 zum Heben und Senken des Frontladers erfolgt. Die beiden Hubzylinder 24 sind kolbenbodenseitig durch eine Verbindungsleitung 98 miteinander und mit der Versorgungsleitung 87 verbunden. Ferner sind die Hubzylinder 24 kolbenstangenseitig durch eine Verbindungsleitung 100 miteinander und mit der Versorgungsleitung 88 verbunden. Beide Hydraulikzylinder 24 werden dadurch gleichermaßen druckbeaufschlagt. Der Hydraulikspeicher 82 ist über eine Verbindungsleitung 102 mit dem Absperrventil 98 verbunden. Ferner führt eine Verbindungsleitung 104 von der Versorgungsleitung 87 und eine weitere Verbindungsleitung 106 von der Versorgungsleitung 88 zum Absperrventil 98. Das Absperrventil weist eine erste Schaltstellung 108 auf, in der alle Anschlüsse geschlossen sind, so dass keine Fluidverbindung zwischen den Verbindungsleitungen 102, 104 und 106 hergestellt ist. Ferner weist das Absperrventil 98 eine zweite Schaltstellung 110 auf, in der die drei Verbindungsleitungen 102, 104 und 106 in Fluidverbindung gebracht werden. Durch Öffnen des Absperrventils 98, d.h. durch Schalten des Absperrventils 98 in die zweite Schaltstellung 110 kann nun gewährleistet werden, dass bei abgekoppelter hydraulischer Versorgung die Hydraulikflüssigkeit nicht in den Kammern 94, 96 gefangen ist, sondern in den Hydraulikspeicher 82 und in die jeweilige andere Kammer 94, 96 entweichen kann, und umgekehrt. Dadurch können die Hubzylinder 24 eine Schwimmstellung einnehmen, in der die Kolben 86 frei bewegbar sind, wobei Volumenunterschiede zwischen den kolbenbodenseitigen Kammern 94 und den kolbenstangenseitigen Kammern 96 durch den Hydraulikspeicher 82 kompensiert werden. Dieser Zustand wiederum ermöglicht eine relativ freie Bewegung des Anbaumast 18 gegenüber der Frontladerschwinge 20, so dass sich der Anbaumast 18 bei geöffnetem Absperrventil 82 frei verschwenkbar beim Ankoppeln ausrichten lässt. Das Öffnen des Absperrventils 98 beim Abkoppeln des Frontladers 13 kann dabei in einem Arbeitsablauf mit einem Entriegeln des Schwenkriegels 54 und dem Trennen der hydraulischen Versorgung (Trennen des Schnellkopplers) durch eine Bedienperson vorgenommen werden. Dadurch, dass das Öffnen des Absperrventils 98 bereits beim Abkoppeln des Frontladers 13 erfolgt, ist dieser auch hier bereits für den nächsten Ankoppelvorgang vorbereitet, so dass ein Bediener ohne den Schlepper 10 zu verlassen den Frontlader 13 mit frei beweglichem Anbaumast 18 ankoppeln kann. Nach dem Ankoppeln des Frontladers 13 muss bei Inbetriebnahme der hydraulischen Funktion (Anschließen der hydraulischen Versorgung) das Absperrventil geschlossen werden, um einen hydraulischen Betrieb des Frontladers 13 zu gewährleisten. Dies kann jedoch ebenfalls in einem Arbeitsablauf mit dem Verbinden des Schnellkopplers erfolgen.

In dem in Figur 12 dargestellten alternativen Ausführungsbeispiel ist ein weiterer (zweiter) Hydraulikspeicher 112 angeordnet, der über eine Verbindungsleitung 114, mit dem Absperrventil 98 verbunden ist, wobei die Verbindungsleitung 102 aus Figur 11 hier entfällt und der weitere Hydraulikspeicher 112 an Stelle der Verbindungsleitung 102 aus Figur 11 mit dem Absperrventil 98 verbunden ist. Ferner ist eine weitere Verbindungsleitung 116 vorgesehen, die sich zwischen der Versorgungsleitung 87 und der Verbindungsleitung 114 erstreckt. In der Verbindungsleitung 116 ist ein in Richtung des weiteren Hydraulikspeichers schließendes Rückschlagventil 118 angeordnet. In dem Ausführungsbeispiel zu Figur 12 wird der erste Hydraulikspeicher 82, im Unterschied zu dem Ausführungsbeispiel in Figur 11, nur zur hydraulischen Federung der Hubzylinder 24 eingesetzt und nicht zum Volumenausgleich der Kammern 94, 96 beim Einschalten der Schwimmstellung herangezogen. Das Absperrventil schließt in der ersten Schaltstellung 108 alle Anschlüsse, so dass keine Fluidverbindung zwischen den Verbindungsleitungen 104, 106 und 114 hergestellt ist. In der zweiten Schaltstellung 110 wird hingegen eine Fluidverbindung zwischen den Verbindungsleitungen 104, 106 und 114 hergestellt. Die übrige Ausgestaltung der hydraulischen Schaltung ist mit der in Figur 11 dargestellten Funktionsweise vergleichbar, nur dass hier zur Druckentlastung des weiteren Hydraulikspeichers 112 noch die Verbindungsleitung 116 in Verbindung mit dem Rückschlagventil 118 vorgesehen ist. Durch Öffnen des Absperrventils 98, d.h. durch Schalten des Absperrventils 98 in die zweite Schaltstellung 110 werden die Verbindungsleitungen 104, 106 und 114 in Fluidverbindung gebracht, wodurch gewährleistet werden kann, dass bei abgekoppelter hydraulischer Versorgung die Hydraulikflüssigkeit nicht in den Kammern 94, 96 gefangen ist, sondern in den weiteren Hydraulikspeicher 112 und in die jeweilige andere Kammer 94, 96 entweichen kann, und umgekehrt. Dadurch können die Hubzylinder 24 eine Schwimmstellung einnehmen, in der die Kolben 86 frei bewegbar sind, wobei Volumenunterschiede zwischen den kolbenbodenseitigen Kammern 94 und den kolbenstangenseitigen Kammern 96 durch den weiteren Hydraulikspeicher 112 kompensiert werden. Dieser Zustand wiederum ermöglicht auch hier eine relativ freie Bewegung des Anbaumast 18 gegenüber der Frontladerschwinge 20, so dass sich der Anbaumast 18 bei geöffnetem Absperrventil 82 frei verschwenkbar beim Ankoppeln ausrichten lässt. Das Öffnen des Absperrventils 98 beim Abkoppeln des Frontladers 13 kann dabei in einem Arbeitsablauf mit einem Entriegeln des Schwenkriegels 54 und dem Trennen der hydraulischen Versorgung (Trennen des Schnellkopplers) durch eine Bedienperson vorgenommen werden. Dadurch, dass das Öffnen des Absperrventils 98 bereits beim Abkoppeln des Frontladers 13 erfolgt, ist dieser auch hier bereits für den nächsten Ankoppelvorgang vorbereitet, so dass ein Bediener ohne den Schlepper 10 zu verlassen den Frontlader 13 mit frei beweglichem Anbaumast 18 ankoppeln kann. Nach dem Ankoppeln des Frontladers 13 muss bei Inbetriebnahme der hydraulischen Funktion (Anschließen der hydraulischen Versorgung) das Absperrventil geschlossen werden, um einen hydraulischen Betrieb des Frontladers 13 zu gewährleisten. Dies kann jedoch ebenfalls in einem Arbeitsablauf mit dem Verbinden des Schnellkopplers erfolgen.

## Patentansprüche

1. Frontladeranordnung (12) mit einem Anbaurahmen (16) und einem Anbaumast (18), wobei der Anbaumast (18) an den Anbaurahmen (16) ankoppelbar und von diesem abkoppelbar ist, mit einer mit dem Anbaumast (18) verbundenen Frontladerschwinge (20), welche über einen sich zwischen Frontladerschwinge (20) und Anbaumast (18) erstreckenden Hydraulikzylinder (24) verschwenkbar ist, wobei der Hydraulikzylinder (24) doppeltwirkend mit einer kolbenstangenseitigen und einer kolbenbodenseitigen Kammer (94, 96) ausgebildet ist, und mit einer Vorrichtung zur hydraulischen Federung der Frontladerschwinge (20), wobei die Vorrichtung einen Hydraulikspeicher (82) in Verbindung mit einem lastdrucksteuerbarem Steuerventil (84) umfasst, **dadurch gekennzeichnet, dass** an der Frontladeranordnung (12) Stellmittel vorgesehen sind, durch welche der Hydraulikzylinder (24) bei abgekoppelter hydraulischer Versorgung in eine Schwimmstellung bringbar ist, wobei die Stellmittel ein Absperrventil (90) umfassen, welches eine erste und eine zweite Schaltstellung (108, 110) aufweist, wobei in der ersten Schaltstellung (108) eine über das Absperrventil (90) laufende Fluidverbindung zwischen der kolbenbodenseitigen Kammer (94), der kolbenstangenseitigen Kammer (96) und dem Hydraulikspeicher (82) hergestellt ist.

2. Frontladeranordnung (12) nach Anspruch 1, **dadurch gekennzeichnet, dass** in der zweiten Schaltstellung (110) eine über das Absperrventil (90) laufende Fluidverbindung zwischen der kolbenbodenseitigen Kammer (94), der kolbenstangenseitigen Kammer (96) und dem Hydraulikspeicher (82) unterbrochen ist.

3. Frontladeranordnung (12) nach Anspruch 1, **dadurch gekennzeichnet, dass** ein weiterer Hydraulikspeicher (112) vorgesehen ist und in der ersten Schaltstellung (108) eine über das Absperrventil (90) laufende Fluidverbindung zwischen der kolbenbodenseitigen Kammer (94), der kolbenstangenseitigen Kammer (96) und dem weiteren Hydraulikspeicher (112) hergestellt ist.

4. Frontladeranordnung (12) nach Anspruch 3, **dadurch gekennzeichnet, dass** in der zweiten Schaltstellung (110) eine über das Absperrventil (90) laufende Fluidverbindung zwischen der kolbenbodenseitigen Kammer (94), der kolbenstangenseitigen Kammer (96) und dem weiteren Hydraulikspeicher (112) unterbrochen ist.

5. Frontladeranordnung (12) nach Anspruch 3 oder 4, **dadurch gekennzeichnet, dass** zwischen dem weiteren Hydraulikspeicher (112) und der kolbenbodenseitigen Kammer (94) eine mit einem Rückschlagventil (118) versehene Bypassleitung (116) angeordnet ist, wobei das Rückschlagventil (118) in Richtung des weiteren Hydraulikspeichers (112) schließt.

6. Landwirtschaftliches Fahrzeug (10) mit einer Frontladeranordnung (12) nach einem der Ansprüche 1 bis 5.

## Claims

1. Front loader arrangement (12) with a mounting frame (16) and a mounting mast (18), wherein the mounting mast (18) can be coupled to the mounting frame (16) and can be decoupled therefrom, with a front loader arm (20) which is connected to the mounting mast (18) and is pivotable via a hydraulic cylinder (24) extending between front loader arm (20) and mounting mast (18), wherein the hydraulic cylinder (24) is formed in a double-acting manner with a piston-rod-side and a piston-head-side chamber (94, 96), and with a device for the hydraulic spring suspension of the front loader arm (20), wherein the device comprises a hydraulic accumulator (82) in conjunction with a load-pressure-controllable control valve (84), **characterized in that** adjusting means, by means of which the hydraulic cylinder (24) can be brought into a floating position when the hydraulic supply is decoupled, are provided on the front loader arrangement (12), wherein the adjusting means comprise a shut-off valve (90) which has a first and a second switching position (108, 110), wherein, in the first switching position (108), a fluid connection, which operates via the shut-off valve (90), is produced between the piston-head-side chamber (94), the piston-rod-side chamber (96) and the hydraulic accumulator (82).

2. Front loader arrangement (12) according to Claim 1, **characterized in that**, in the second switching position (110), a fluid connection, which operates via the shut-off valve (90), between the piston-head-side chamber (94), the piston-rod-side chamber (96) and the hydraulic accumulator (82) is interrupted.

3. Front loader arrangement (12) according to Claim 1, **characterized in that** a further hydraulic accumulator (112) is provided, and, in the first switching position (108), a fluid connection, which operates via the shut-off valve (90), is produced between the piston-head-side chamber (94), the piston-rod-side chamber (96) and the further hydraulic accumulator (112).

4. Front loader arrangement (12) according to Claim 3, **characterized in that**, in the second switching position (110), a fluid connection, which operates via the shut-off valve (90), between the piston-head-side chamber (94), the piston-rod-side chamber (96) and the further hydraulic accumulator (112) is interrupted.

5. Front loader arrangement (12) according to Claim 3 or 4, **characterized in that** a bypass line (116) which is provided with a nonreturn valve (118) is arranged between the further hydraulic accumulator (112) and the piston-head-side chamber (94), wherein the nonreturn valve (118) closes in the direction of the further hydraulic accumulator (112).

6. Agricultural vehicle (10) with a front loader arrangement (12) according to one of Claims 1 to 5.

## Revendications

1. Ensemble (12) de chargeur frontal présentant
un châssis de superstructure (16) et un mât de superstructure (18), le mât de superstructure (18) pouvant être accouplé au châssis de superstructure (16) et en être désaccouplé,
une bielle oscillante (20) de chargeur frontal reliée au mât de superstructure (18) et apte à pivoter grâce à un vérin hydraulique (24) s'étendant entre la bielle oscillante (20) de chargeur frontal et le mât de superstructure (18),
le vérin hydraulique (24) étant à double action et présentant une chambre côté tige de piston et une chambre côté pied de piston (94, 96), et
un ensemble d'amortissement élastique de la bielle oscillante (20) de chargeur frontal, l'ensemble comprenant un réservoir hydraulique (82) relié à une soupape de commande (84) asservie à la pression de charge,
**caractérisé en ce que**
des moyens de réglage par lesquels le vérin hydraulique (24) peut être amené en une position flottante lorsque l'alimentation hydraulique est débranchée sont prévus sur l'ensemble (12) de chargeur frontal,
**en ce que** les moyens de réglage comprennent une soupape de blocage (90) qui présente une première et une deuxième position de commutation (108, 110) et
**en ce que** dans la première position de commutation (108), une liaison hydraulique passant par la soupape de blocage (90) est établie entre la chambre (94) située côté pied de piston, la chambre (96) située côté tige de piston et le réservoir hydraulique (82).

2. Ensemble (12) de chargeur frontal selon la revendication 1, **caractérisé en ce que** dans la deuxième position de commutation (110), la liaison hydraulique passant par la soupape de blocage (90) entre la chambre (94) située côté pied de piston, la chambre (96) située côté tige de piston et le réservoir hydraulique (82) est rompue.

3. Ensemble (12) de chargeur frontal selon la revendication 1, **caractérisé en ce qu'**un autre réservoir hydraulique (112) est prévu et **en ce que** dans la première position de commutation (108), une liaison hydraulique passant par la soupape de blocage (90) est établie entre la chambre (94) située côté pied de piston, la chambre (96) située côté tige de piston et l'autre réservoir hydraulique (112).

4. Ensemble (12) de chargeur frontal selon la revendication 3, **caractérisé en ce que** dans la deuxième position de commutation (110), la liaison hydraulique passant par la soupape de blocage (90) entre la chambre (94) située côté pied de piston, la chambre (96) située côté tige de piston et l'autre réservoir hydraulique (112) est rompue.

5. Ensemble (12) de chargeur frontal selon les revendications 3 ou 4, **caractérisé en ce qu'**un conduit de dérivation (116) doté d'une soupape anti-retour (118) est disposé entre l'autre réservoir hydraulique (112) et la chambre (94) située côté pied de piston, la soupape anti-retour (118) étant fermée dans la direction allant vers l'autre réservoir hydraulique (112).

6. Véhicule agricole (10) présentant un ensemble (12) de chargeur frontal selon les revendications 1 à 5.
